Europäisches Patentamt

(19) European Patent Office

Office européen des brevets

(11) Publication number: **0 012 022**
**B1**

(12) EUROPEAN PATENT SPECIFICATION

(45) Date of publication of patent specification: 08.08.84

(51) Int. Cl.³: **F 16 H  3/08, B 60 K  17/08**

(21) Application number: **79302732.7**

(22) Date of filing: **30.11.79**

(54) **Change speed gear train.**

(30) Priority: **05.12.78 GB  4719878**

(43) Date of publication of application:
**11.06.80 Bulletin 80/12**

(45) Publication of the grant of the patent:
**08.08.84 Bulletin 84/32**

(84) Designated Contracting States:
**DE FR IT SE**

(56) References cited:
**DE - B - 1 208 587**
**FR - A - 1 043 561**
**GB - A -  837 637**
**US - A - 3 064 488**

(73) Proprietor: **Windsor-Smith, Claude Peter**
**11 The Drive Woodhouse Eaves**
**Loughborough Leicestershire (GB)**
(73) Proprietor: **Tailby, Raymond Alfred**
**40 Moat Road**
**Loughborough Leicestershire (GB)**

(72) Inventor: **Windsor-Smith, Claude Peter**
**11 The Drive Woodhouse Eaves**
**Loughborough Leicestershire (GB)**
Inventor: **Tailby, Raymond Alfred**
**40 Moat Road**
**Loughborough Leicestershire (GB)**

(74) Representative: **Wisher, Michael Frederick et al,**
**Urquhart-Dykes & Lord Archdeaconry House**
**Gravel Walk**
**Peterborough, Cambs. PE1 1YU (GB)**

Courier Press, Leamington Spa, England.

# Description

This invention relates to change speed gear trains primarily, but not exclusively, for use in the drive transmissions of vehicles such as public service vehicles.

The drive transmissions of many public service vehicles currently in use comprise planetary or epicyclic gearboxes. Such gearboxes are complex, expensive and difficult to understand and service, but despite these disadvantages have been developed to a stage at which they provide smooth operation with automatic ratio changing facilities, and are now universally accepted and used.

Constant mesh multiple layshaft type gear trains are considerably simpler than planetary gear trains and many proposals have been made for their use in various types of machines including some proposals for their use in various types of land vehicles. However, such gear trains have not been accepted for use in road vehicles in general nor indeed for use in public service vehicles, such as buses, where the planetary gear train is still universally used.

Among the reasons for this failure of multiple layshaft gear trains to be accepted for use in public service vehicles and other road vehicles are the following. Firstly, there is the question of the service life of the clutches used in multiple layshaft gear trains for ratio selection purposes. Previous proposals for such gear trains have required the use of clutches having inadequate service and life characteristics for use under the arduous conditions of public service vehicles. Moreover, where the previous proposals have included the use of clutches offering an adequate life expectancy, no provision has been made for controlling the drag resulting from the use of the clutch whereby the fuel efficiency of the vehicle in which the transmission is incorporated is seriously impaired.

Secondly, there is the question of size. Many previous proposals for multiple layshaft gear trains have required the use of a gearbox having a size quite unacceptable for incorporation in the cramped engine compartment of modern public service vehicles. Moreover, even where a gear box of modest proportions has been proposed, it has usually been the case that the layout of the gear train has been such that the provision of the necessary range of transmission ratios needed for a road vehicle (for a bus this range is from about 4 to 1 for bottom gear to 1 to 1 for top gear) has not been possible. In such circumstances, modification of the gear train to achieve the necessary ratios would in most cases result in a significant increase in the size of the gearbox.

Thirdly, there is the question of servicing. Most of the previous proposals for multi-layshaft constant mesh gear trains have not provided sufficient attention to the need for adequate clutch service life in combination with easy access to the clutches for servicing purposes, without introducing unacceptable drag into the drive transmission. Previous proposals have in many cases taught the use of unlubricated external clutches, which would have quite unacceptable service life for road vehicle use. Where internal clutches have been proposed, these have usually been subject to uncontrolled splash lubrication (whereby uncontrolled and unacceptably high drag results) and/or the clutches have been located mid-way along the layshafts where servicing access is extremely difficult.

Summarising, prior proposals for the use of multi layshaft constant mesh gear trains have offered no significant advantages over the now widely accepted planetary gear train, and have therefore never achieved any significant penetration of the road vehicle market. In the case of special vehicles, such as off-highway and shuttle-type vehicles, the constraints of service life and size and servicing cost do not apply as critically as in road vehicles, and therefore multi layshaft constant mesh gearboxes may possibly have proved acceptable in such special situations.

French patent specification 1,043,561 discloses a two-layshaft constant mesh gear train providing five transmission ratios (including a direct-drive top gear) by means of four dry external cone clutches positioned one at each end of both of the layshafts so as to achieve double usage of both of the layshafts. The teaching of this specification of unlubricated external clutches and double usage of both layshafts is subject to the significant disadvantages of inadequate clutch service life and inaccessibility of two of the clutches when the gear train is mounted adjacent a prime mover.

United States patent specification 3,064,488 likewise discloses a multi layshaft constant mesh gear train with multiple intermeshing layshaft gears providing a large number of transmission ratios and complex torque input paths. As a result of these factors, the teaching of this prior specification is subject to the above-mentioned disadvantages of unacceptable size and complexity. Moreover, the teaching is once again of double usage of each layshaft with half of the clutches relatively inaccessible at one end of the gear train.

An object of the present invention is to provide a constant mesh change speed gear train offering improvements in relation to one or more of the requirements and/or technical problems identified above.

According to the invention there is provided a constant mesh change speed gear train comprising:

an input shaft;
an output shaft;
an input shaft gear on the input shaft;
an output shaft gear on the output shaft;
a plurality of layshafts having corresponding constant mesh layshaft gears;

a gearbox casing containing the gear train; and clutch means within the gearbox casing and located at the ends of said layshafts for selective transmission of drive through the layshafts, the clutch means being accessible for servicing purposes by removable or openable cover means of the gearbox casing;

characterised by the following features in combination:

said layshaft gears comprise layshaft change speed input gears and layshaft output gears with one layshaft input gear and one layshaft output gear for each layshaft; and the layshaft input gear of each of said plurality of layshafts meshes directly with said input shaft gear and the layshaft output gear of each of said plurality of layshafts meshes directly with said output shaft gear; and one layshaft and its corresponding clutch means and layshaft gears being provided for each layshaft-transmitted transmission ratio of the gear train; and said clutch means being located within said gearbox casing at one end thereof for said access.

In an embodiment of the invention described below, the provision of an input shaft gear and an output shaft gear meshing directly with the corresponding input and output gears of each of the plurality of layshafts provides simplicity of construction and overall compactness while nevertheless providing four transmission ratios with the necessary range of ratios for road vehicle usage. In the same embodiment, the provision of one layshaft and its corresponding clutch means for each layshaft-transmitted transmission ratio between the input shaft gear and the output shaft gear enables the use of clutch means within the gearbox casing and all at one end thereof whereby ease of servicing is greatly improved.

Embodiments of the invention will now be described by way of example with reference to the accompanying drawings in which:

Figure 1 shows a generally axial section through a gearbox casing and a constant mesh change speed gear train therein;

Figure 2 shows an end view of the gearbox casing of Figure 1 as viewed in the direction of arrow II in Figure 1;

Figures 3 to 6 show, diagrammatically, the torque path through the gearbox of Figures 1 and 2 in each of the four forward drive transmission ratios thereof;

Figure 7 shows, in a view similar to that of Figure 1 but on a smaller scale, a second embodiment of the gear train with the drive input shaft of the gear train being coupled to an engine through a bevel drive and a laterally extending shaft, this figure also showing the remainder of the drive transmission from the gear train to the differential gear and road wheels of a public service vehicle;

Figure 8 shows a further embodiment of the gear train, similar to that of Figure 7, but with a modified drive coupling to the input shaft of the gear train; and

Figure 9 shows an end elevation view of the gearbox of Figure 8, the direction of viewing being indicated by arrow IX in Figure 8.

In the drawings, similar parts are identified throughout the drawings by similar reference numerals.

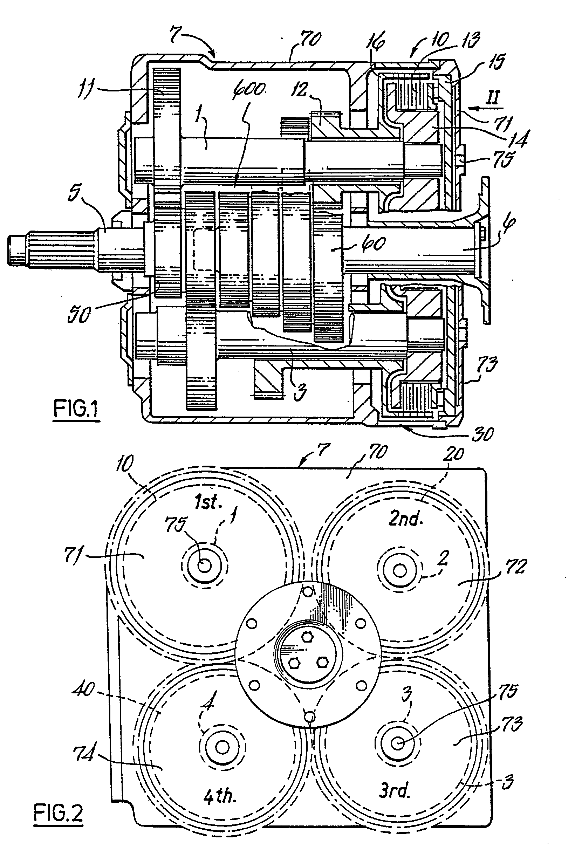

As shown in Figures 1 and 2, a gearbox having in-line input and output shafts provides four forward transmission ratios, and each such ratio is transmitted through layshaft gears on a corresponding layshaft, so that there is a layshaft 1, 2, 3 and 4 for each transmission ratio.

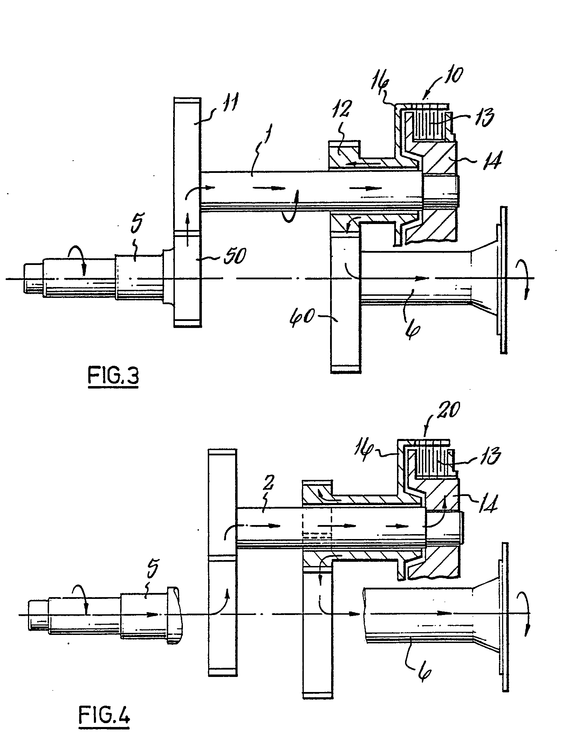

Thus, in the case of the first gear layshaft 1 shown in the upper part of Figure 1, and in Figure 3, a layshaft input gear 11 fast with layshaft 1 is in constant direct meshing engagement with a corresponding input gear 50 on an input shaft 5 of the gear train, whilst a layshaft output gear 12 on layshaft 1 is arranged to be drivably coupled to layshaft input gear 11 by means of clutch means 10 at one end of layshaft 1. Clutch means 10 is of the multi-disc type arranged for fluid pressure (eg hydraulic or pneumatic) operation. When layshaft output gear 12 is drivably coupled to layshaft input gear 11, a first or low gear ratio is transmitted to a corresponding gear 60 of a gear train output cluster gear 600 on a gear train output shaft 6.

The disc pack 13 of clutch means 10 is acted upon by a piston 15 for effecting drive between a hub 14 of the clutch means, which is secured to layshaft input gear 11, and a spider 16 secured to the layshaft output gear 12.

As will be evident from Figure 2, the layshafts 1, 2, 3 and 4 for the corresponding transmission ratios are disposed about the gear train input and output shafts 5 and 6 in a symmetrical and axially parallel manner with each clutch means 10, 20, 30 and 40 on its associated layshaft 1, 2, 3 and 4 being disposed at the same end of the gearbox 7. Thus, by removal of end cover means 71, 72, 73 or 74 of the gearbox casing 70, access is immediately afforded to all four clutches 10, 20, 30, 40 for servicing and/or replacement purposes in a simple and convenient manner.

As shown in Figure 1, the layshaft input gears 11 are arranged to mesh with the input shaft gear 50 of the gear train at the end of the gearbox casing 70 remote from the cover means 71 to 74.

Each cover means or plate 71, 72, 73, 74 is conveniently provided with a port 75 for the separate admission of fluid under pressure against a corresponding piston 15.

This arrangement is particularly advantageous in the case of gearboxes of public service vehicles which are subject to frequent usage and heavy wear, and it enables servicing to be quickly carried out at a minimum cost since the dismantling of the shaft and gear assembly of the gearbox is avoided or minimised as compared with gearboxes where the clutches are disposed between gears in a mid-part or similar location in the gearbox interior. The gear train general arrangement described herein also affords considerable servicing advantages in this respect over gearboxes of the epicyclic type.

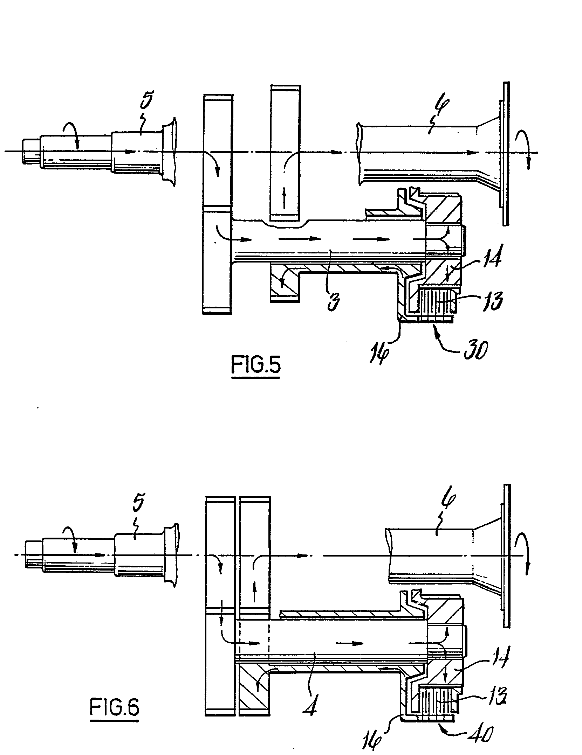

The torque path in each of the four forward transmission ratios provided by gearbox 7 by operation of the corresponding layshaft clutch means 10, 20, 30 and 40 is indicated in Figures 3 to 6. In each case, smooth engagement and disengagement of the selected transmission ratio drive can be effected by selective fluid pressure operation of the appropriate clutch means. The provision of a reverse drive ratio is not shown but can be effected in any known or suitable manner eg. by dog clutch operation of a constant mesh train.

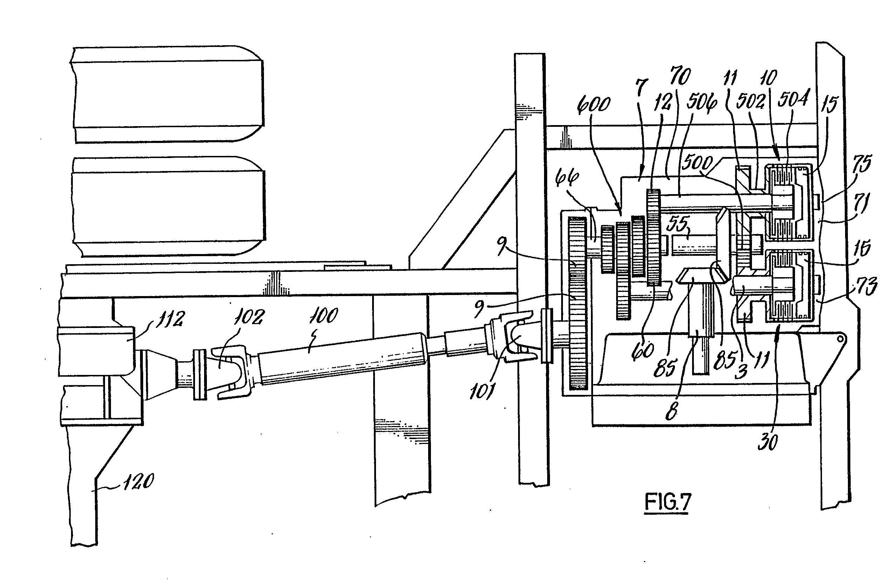

In the embodiment of Figure 7, a public service vehicle has a transverse rear engine installation for driving the rear wheel axle, and the gearbox 7 has a drive input arrangement comprising a laterally extending shaft 8 coupled through bevel gears 85 to the gearbox input shaft 55 which carries the gearbox input gear 500, the latter gear being in constant mesh with the layshaft input gears 11. The gearbox input shaft 55 is axially aligned with the gearbox output shaft 66.

The general construction and layshaft arrangement in the embodiment of Figure 7 is substantially the same as that already described except that the drive input is through the tubular outer shaft 502 of each layshaft to the clutch spider or cover 504, and the drive output from the clutch is through the inner shaft 506 of each layshaft, instead of vice-versa. Each clutch means 10, 20, 30, 40 comprises a disc pack and a spider or cover, the spider or cover being directly connected to the layshaft input gear 11 through outer shaft 502. The gearbox output shaft gear 600 meshes with the layshaft output gears 12 at the end of the gearbox casing 70 remote from the clutch cover means 71 to 74.

It will be noted from the two layshaft clutches 10, 30 seen in Figure 7, that the clutch means 10, 20, 30, 40 are all positioned at the rear of gearbox 7 for convenient servicing and/or replacement access.

The gearbox 7 of Figure 7 also comprises transfer gearing 9 to transmit drive from the gearbox output shaft 66 to the propeller shaft drive 100 and hence to the differential gear 112 of the rear axle 120. As will be apparent from Figure 7, this arrangement minimises the angle of the propeller shaft drive 100 as regards it universal joint connections 101, 102 to gearbox 7 and differential gear 112 respectively, and also virtually avoids a "Z"-shaped drive transmission configuration.

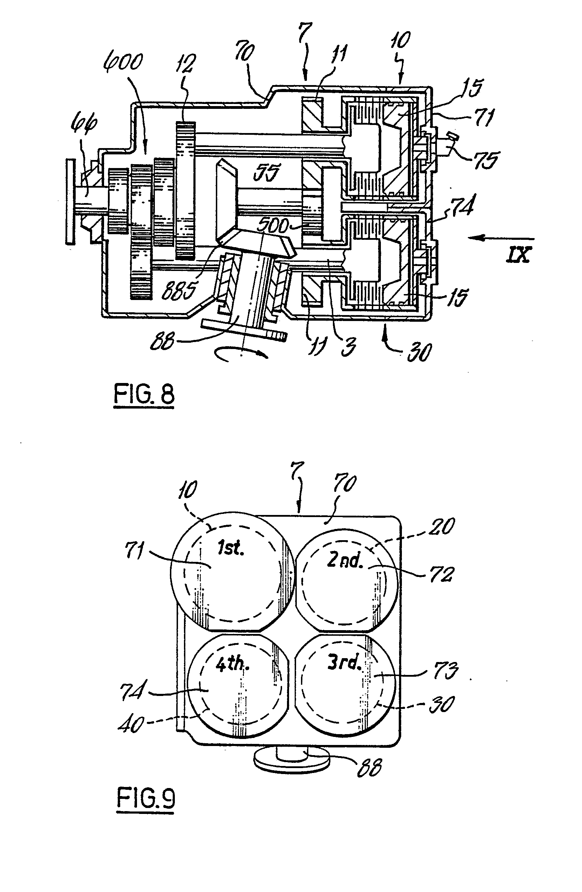

Figures 8 and 9 show a modification of the drive input arrangement described above in relation to Figure 7. In Figures 8 and 9, a laterally-extending shaft 88 is inclined at less than 90° to the axis of the gearbox input shaft 55 and its associated drive input gear 500. Shaft 88 is drivably coupled to the gearbox input shaft 55 by a bevel gear drive 885. This enables the general axis of the gearbox to be inclined with respect to that of the engine output shaft or of a fluid or other coupling to the engine. This results in the attitude of the gearbox output shaft 66 being such as to facilitate the use of a propeller shaft drive therefrom to the differential gear of the rear axle, with a minimum of angling of the universal joint connections. At the same time the clutch means 10, 20, 30, 40 of the layshafts are again conveniently situated at the rear of the gearbox 7 for access purposes.

In the embodiments of Figures 7, 8 and 9 the end of the gearbox 7 at which the clutch means 10, 20, 30 and 40 are located and carrying the cover plates 71 to 74 is positioned endwise at the rear end of the vehicle for ready access to the clutches, and such access is afforded without the requirement of removing the gearbox from the vehicle.

Whereas separate end cover plates 71 to 74, one for each clutch means, are preferable, a single cover plate may be employed, or cover plates covering more than one clutch and the associated pistons 15. Again, removable cover plates are preferably employed, but hinged or otherwise openable cover plates may be employed which are capable of fluidtight closure.

Although the constant mesh change speed gear train described above is particularly suitable for use in a motor vehicle transmission, the gear train is also capable of various other drive transmission applications such as in marine and rail vehicle transmissions.

In a further embodiment of the invention (not illustrated), a retardable drive transmission comprises a gearbox as described above in which one or more of the clutch means of the gear train (other than the clutch means engaged for drive transmission purposes at any given time) can be actuated to provide a retarding action. Thus, by use of appropriate control means, the clutch means 10 and/or 20 may be partially engaged during full drive engagement of the clutch means 40 (corresponding to fourth or top gear), or of clutch means 30 (corresponding to third gear), so as to retard the transmission during engagement of the third and fourth transmission ratios. Similar retardation during engagement of the first and the second transmission ratios is not normally necessary due to the low drive ratios themselves and the slow speed operation of a vehicle during use of these ratios.

## Claims

1. A constant mesh change speed gear train comprising:

an input shaft (5, 55);
an output shaft (6, 66);
an input shaft gear (50, 500) on the input shaft;
an output shaft gear (60, 600) on the output shaft;
a plurality of layshafts (1, 2, 3, 4) having corresponding constant mesh layshaft gears (11, 12);
a gear box casing (70) containing the gear train; and
clutch means (10, 20, 30, 40) within the gearbox casing (70) and located at the ends of said layshafts for selective transmission of drive through the layshafts, the clutch means being accessible for servicing purposes by removable or openable cover means (71 to 74) of the gearbox casing;
characterised by the following features in combination:
said layshaft gears (11, 12) comprise layshaft change speed input gears (11) and layshaft output gears (12) with one layshaft input gear and one layshaft output gear for each layshaft; and
the layshaft input gear (11) of each of said plurality of layshafts (1, 2, 3, 4) meshes directly with said input shaft gear (50, 500) and the layshaft output gear (12) of each of said plurality of layshafts meshes directly with said output shaft gear (60, 600); and
one layshaft (1, 2, 3, 4) and its corresponding clutch means (10, 20, 30, 40) and layshaft gears (11, 12) being provided for each layshaft-transmitted transmission ratio of the gear train; and
said clutch means (10, 20, 30, 40) being located within said gearbox casing (70) at one end thereof for said access.

2. A constant mesh change speed gear train according to claim 1 characterised in that said input shaft gear (50, 500) forms the sole drive input connection to said gear train.

3. A constant mesh change speed gear train according to claim 1 or claim 2 characterised in that both said layshaft input gears (11) and said layshaft output gears (12) comprise change speed gears.

4. A constant mesh change speed gear train according to any preceding claim characterised in that said input shaft gear (50, 500) or said output shaft gear (60, 600) comprises a cluster gear.

5. A constant mesh change speed gear train according to any preceding claim characterised in that said input shaft and said output shaft are disposed coaxially.

6. A constant mesh change speed gear train according to any preceding claim characterised in that said clutch means (10, 20, 30, 40) are each selectively actuatable by corresponding fluid pressure operated piston means (15) adjacent thereto and within the gearbox casing (70) at said end thereof and together with said clutch means said piston means are accessible for servicing purposes.

7. A constant mesh change speed gear train according to any one of the preceding claims, characterised in that said input shaft (5, 55) receives an input drive from a shaft (8, 88) through a bevel or similar gear drive (85, 885).

8. A constant mesh change speed gear train according to claim 7 characterised in that said output shaft (6, 66) provides an output drive at one end of the gearbox casing (70), and said cover means (71, 72, 73, 74) is situated at the other end of the gearbox casing whereby said gear train can be driven by a vehicle engine or motor which is transversely mounted in a vehicle in relation to the fore and aft axis of the vehicle, with the end of the gearbox casing (70) containing said clutch means being positioned endwise on the vehicle for ready access to said clutch means.

9. A constant mesh change speed gear train according to any one of the preceding claims characterised in that said plurality of layshafts (1, 2, 3, 4) each comprise a concentric assembly of an inner shaft (506) and an outer shaft (502) arranged one within the other, and said layshaft input gears (11) are mounted on said layshaft outer shafts (502), and said layshaft output gears (12) are mounted on said layshaft inner shafts (506).

10. A constant mesh change speed gear train according to any one of claims 1 to 8 characterised in that said plurality of layshafts (1, 2, 3, 4) each comprise a concentric assembly of an inner shaft (506) and an outer shaft (502) arranged one within the other, and said layshaft input gears (11) are mounted on said layshaft inner shafts (506), and said layshaft output gears (12) are mounted on said layshaft outer shafts (502).

11. A constant mesh change speed gear train according to claim 10 characterised in that said layshaft input gears (11) are arranged to mesh with said input shaft gear (50) at the end of said gearbox casing (70) remote from said cover means (71, 72, 73, 74).

12. A constant mesh change speed gear train according to claim 9 characterised in that each of said clutch means (10, 20, 30, 40) comprises a disc pack and a spider or cover (504), and said spider or cover is directly connected to said layshaft input gear (11).

13. A constant mesh change speed gear train according to claim 9 or claim 12 characterised in that said output shaft gear (60, 600) is located at the end of said gearbox casing remote from said cover means (71, 72, 73, 74).

14. A constant mesh change speed gear train according to any one of claims 1 to 7 characterised in that said output shaft (6) extends through the end wall of said gearbox casing (70) at the same end thereof as said cover means (71, 72, 73, 74).

15. A constant mesh change speed gear train according to any one of claims 1 to 14 characterised in that said cover means (71, 72, 73, 74) of said gearbox casing (70) does not serve to carry bearings for said layshafts (1, 2, 3, 4) and is removable or openable without moving said layshafts.

16. A constant mesh change speed gear train according to any one of claims 1 to 15 characterised in that control means is provided for said clutch means (10, 20, 30, 40), the control means being operable to effect partial engagement of at least one of said clutch means in addition to the clutch means engaged for drive transmission purposes, in order to retard the gear train.

17. A constant mesh change speed gear train according to claim 16 characterised in that said control means is operable when one transmission ratio is engaged for drive transmission purposes to provide one output shaft speed range, to partially engage clutch means of another transmission ratio corresponding to a lower output shaft speed range.

18. A constant mesh change speed gear train according to claim 16 characterised in that said control means is operable, when one transmission ratio is engaged for drive transmission purposes to provide one output shaft speed range, to partially engage clutch means of two other transmission ratios corresponding to lower output shaft speed ranges.

19. A road vehicle comprising a constant mesh change speed gear train according to any one of the preceding claims.

20. A road vehicle according to claim 19 characterised by a vehicle engine or motor which is transversely mounted or mountable in the vehicle in relation to the fore and aft axis of the vehicle, and at the rear end of the vehicle with respect to the direction of normal operative forward motion thereof, the gearbox casing (70) being mounted adjacent one end of said engine or motor to receive the drive input therefrom and the drive output being transmitted through a propeller shaft (100) and a differential gear (112) to the rear wheels of the vehicle via output gearing (9) of the gear train.

**Patentansprüche**

1. Wechselgetriebe mit im Dauereingriff befindlichen Getriebestufen mit einer Antriebswelle (5, 55), einer Abtriebswelle (6, 66), einem Antriebswellen-Zahnrad (50, 500) auf der Antriebswelle, einem Abtriebswellen-Zahnrad (60, 600) auf der Abtriebswelle, einer Mehrzahl von Vorgelegewellen (1, 2, 3, 4) mit zugeordneten, im Dauereingriff stehenden Vorgelegewellen-Zahnrädern (11, 12), mit einem die Getriebestufen umfassenden Getriebegehäuse (70) und mit an den Enden der Vorgelegewellen angeordneten Kupplungsglie-

dern (10, 20, 30, 40) in dem Getriebegehäuse zwecks selektiver Übertragung des Antriebes durch die Vorgelegewellen, wobei die Kupplungsglieder von außen über vom Getriebegehäuse entfernbare Deckelelemente (71—74) zugängig sind, gekennzeichnet durch folgende Kombinationsmerkmale:

— Die Vorgelegewellen-Zahnräder (11, 12) umfassen Vorgelegewellen-Getriebestufen-Antriebszahnräder (11) und Vorgelegewellen-Abtriebs-Zahnräder (12) mit einem Antriebs- und einem Abtriebs-Zahnrad für jede Vorgelegewelle,

— das Vorgelegewellen-Antriebszahnrad (11) einer jeden der Vorgelegewellen (1, 2, 3, 4) steht im direkten Eingriff mit dem Antriebswellen-Zahnrad (50, 500) und das Vorgelegewellen-Abtriebs-Zahnrad (12) einer jeden der Vorgelegewellen steht im direkten Eingriff mit dem Abtriebswellen-Zahnrad (60, 600),

— eine Vorgelegewelle (1, 2, 3, 4) und ihre zugeordneten Kupplungsglieder (10, 20, 30, 40) samt Vorgelegewellen-Antriebs- und -Abtriebs-Zahnrad (11, 12) sind für jede das Übersetzungsverhältnis ändernde Getriebestufe des Wechselgetriebes vorgesehen, und

— für den Zugang sind die Kupplungsglieder (10, 20, 30, 40) innerhalb des Getriebegehäuses (70) an einem seiner Enden angeordnet.

2. Wechselgetriebe mit im Dauereingriff befindlichen Getriebestufen nach Anspruch 1, dadurch gekennzeichnet, daß die Antriebswelle (50, 500) den alleinigen Getriebe-Eingang bildet.

3. Wechselgetriebe mit im Dauereingriff befindlichen Getriebestufen nach Anspruch 1 oder 2, dadurch gekennzeichnet, daß sowohl die Vorgelegewellen-Antriebs-Zahnräder (11) als auch die Vorgelegewellen-Abtriebs-Zahnräder (12) Getriebestufen-Zahnräder umfassen.

4. Wechselgetriebe mit im Dauereingriff befindlichen Getriebestufen nach einem der vorhergehenden Ansprüche, dadurch, gekennzeichnet, daß das Antriebswellen-Zahnrad (50, 500) oder das Abtriebswellen-Zahnrad (60, 600) ein Schiebe-Zahnrad umfassen.

5. Wechselgetriebe mit im Dauereingriff befindlichen Getriebestufen nach einem der vorhergehenden Ansprüche, dadurch gekennzeichnet, daß die Antriebswelle und die Abtriebswelle koaxial angeordnet sind.

6. Wechselgetriebe mit im Dauereingriff befindlichen Getriebestufen nach einem der vorhergehenden Ansprüche, dadurch gekennzeichnet, daß die Kupplungsglieder (10, 20, 30, 40) mittels benachbarter, druckmittelbetätigter Kolbenglieder (5) selektiv activierbar sind und in dem Getriebegehäuse (70) an dessen Ende angeordnet und mit den Kupplungsgliedern von außen für Wartungszwecke zugänglich sind.

7. Wechselgetriebe mit im Dauereingriff befindlichen Getriebestufen nach einem der vorhergehenden Ansprüche, dadurch gekennzeichnet, daß die Antriebswelle (5, 55) über ein Kegel- oder ähnliches Getriebe (85, 885) von einer Welle (8, 88) angetrieben ist.

8. Wechselgetriebe mit im Dauereingriff befindlichen Getriebestufen nach Anspruch 7, dadurch gekennzeichnet, daß die Abtriebswelle (6, 66) einen Getriebeausgang an dem einen Ende des Getriebegehäuses (70) bildet, und daß die Deckelelemente (71, 72, 73, 74) am anderen Ende des Getriebegehäuses angeordnet sind, wobei das Wechselgetriebe mittels eines Fahrzeugmotors antreibbar ist, der quer im Fahrzeug in Beziehung zu der Vorder- und Hinterachse des Fahrzeuges und zwecks leichten Zuganges zu den Kupplungsgliedern mit dem die Kupplungsglieder aufweisenden Ende des Getriebegehäuses (70) dem einen Ende des Fahrzeuges zugeordnet angeordnet ist.

9. Wechselgetriebe mit im Dauereingriff befindlichen Getriebestufen nach einem der vorhergehenden Ansprüche, dadurch gekennzeichnet, daß jede der Vorgelegewellen (1, 2, 3, 4) aus einer konzentrischen inneren Welle (506) und einer diese umfassende äußeren Welle (502) besteht, und daß die Vorgelegewellen-Antriebs-Zahnräder (11) auf den äußeren Wellen (502) und die Vorgelege-Abtriebs-Zahnräder (12) auf den inneren Wellen (506) angeordnet sind.

10. Wechselgetriebe mit im Dauereingriff befindlichen Getriebestufen nach einem der Ansprüche 1 bis 8, dadurch gekennzeichnet, daß jede der Vorgelegewellen (1, 2, 3, 4) aus einer konzentrischen Anordnung mit einer inneren Welle (506) und einer sie umfassenden äußeren Welle (502) besteht, und daß die Vorgelegewellen-Antriebs-Zahnräder (11) auf den inneren Wellen (506) und die Vorgelegewellen-Abtriebs-Zahnräder (12) auf den äußeren Wellen angeordnet sind.

11. Wechselgetriebe mit in Dauereingriff befindlichen Getriebestufen nach Anspruch 10, dadurch gekennzeichnet, daß die Vorgelegewellen-Antriebs-Zahnräder (11) mit dem Antriebswellen-Zahnrad (50) an dem den Abdeckgliedern abgewandten Ende des Getriebegehäuses (70) in Eingriff stehen.

12. Wechselgetriebe mit im Dauereingriff befindlichen Getriebestufen nach Anspruch 9, dadurch gekennzeichnet, daß jedes der Kupplungsglieder (10, 20, 30, 40) aus einer Scheibenpackung und einem Armstern oder Deckplatte (504) besteht, und daß der Armstern jeweils direkt mit dem Vorgelegewellen-Antriebs-Zahnrad (11) verbunden ist.

13. Wechselgetriebe mit im Dauereingriff befindlichen Getriebestufen nach den Ansprüchen 9 oder 12, dadurch gekennzeichnet, daß das Abtriebswellen-Zahnrad (60, 600) an dem den Abdeckgliedern (71, 72, 73, 74) abgewandten Ende des Getriebegehäuses angeordnet ist.

14. Wechselgetriebe mit im Dauereingriff befindlichen Getriebestufen nach einem der Ansprüche 1 bis 7, dadurch gekennzeichnet, daß die Abtriebswelle (6) die gleiche Endwand des Getriebegehäuses (70) wie die Abdeckglieder (71, 72, 73, 74) durchsetzt.

15. Wechselgetriebe mit im Dauereingriff befindlichen Getriebestufen nach einem der Ansprüche 1 bis 14, dadurch gekennzeichnet, daß die Abdeckglieder (71, 72, 73, 74) des Getriebegehäuses (70) frei von Lagerstellen der Vorgelegewellen (1, 2, 3, 4) sind und vom Getriebegehäuse ohne Bewegen der Vorgelegewellen abnehmbar sind.

16. Wechselgetriebe mit im Dauereingriff befindlichen Getriebestufen nach einem der Ansprüche 1 bis 15, dadurch gekennzeichnet, daß für die Kupplungsglieder (10, 20, 30, 40) Steuerglieder vorgesehen sind, die zwecks partiellen Ineingriffbringens von mindestens einem der Kupplungsglieder zusätzlich zu den für die Bewegungsübertragung in Eingriff befindlichen Kupplungsgliedern aktivierbar sind, um den Kraftübertragungsweg zu verzögern.

17. Wechselgetriebe mit im Dauereingriff befindlichen Getriebestufen nach Anspruch 16, dadurch gekennzeichnet, daß die Steuerglieder, sobald ein Übersetzungsverhältnis zwecks Erzielung eines Abtriebswellen-Drehzahlbereiches eingeschaltet ist, betätigbar sind, um mittels teilweisem Eingriff in die Kupplungsglieder ein anderes Übersetzungsverhältnis entsprechend einem niedrigeren Abtriebswellen-Drehzahlbereich herbeizuführen.

18. Wechselgetriebe mit im Dauereingriff befindlichen Getriebestufen nach Anspruch 16, dadurch gekennzeichnet, daß die Steuerglieder, sobald ein Übersetzungsverhältnis zwecks Erzielung eines Abtriebswellen-Drehzahlbereiches eingeschaltet ist, aktivierbar sind, um mittels teilweisem Eingriff in die Kupplungsglieder zweier anderer Übersetzungsverhältnisse einen niedrigeren Abtriebswellen-Drehzahlbereich herbeizuführen.

19. Straßenfahrzeug, gekennzeichnet durch die Verwendung eines Wechselgetriebes nach einem oder mehreren der vorhergehenden Ansprüche.

20. Straßenfahrzeug nach Anspruch 19, gekennzeichnet durch eine Fahrzeugmaschine oder Motor, die oder der quer im Fahrzeug in Beziehung zur Vorder- und Hinterachse des Fahrzeuges und am hinteren Ende des Fahrzeuges in bezug auf die normale Vorwärtsbewegungsrichtung gelagert ist, wobei das Getriebegehäuse (70) dem einen Ende der Fahrzeugsmaschine oder des Motors benachbart gelagert ist zwecks Einleitung des Antriebsdrehmomentes, und wobei das Abtriebsdrehmoment über ein Abtriebs-Zahnrad (9) des Wechselgetriebes, über eine Kardanwelle (100) und ein Differentialgetriebe (112) auf die Hinterräder des Fahrzeuges übertragen wird.

## Revendications

1. Train d'engrenages pour changement de vitesse à engrènement constant comprenant: un arbre d'entrée (5, 55); un arbre de sortie (6, 66); un pignon d'arbre d'entrée (50, 500) sur l'arbre d'entrée; un pignon d'arbre de sortie (60, 600), sur l'arbre de sortie; une pluralité d'arbres intermédiaires (1, 2, 3, 4) portant des pignons correspondants (11, 12) d'arbre intermédiaire, à engrènement constant; un carter (70) de boîte de vitesses, contenant le train d'engrenages; et des moyens d'embrayage (10, 20, 30, 40), placés dans le carter (70) de boîte de vitesses et situés aux extrémités des arbres intermédiaires, pour la transmission sélective d'entraînement au moyen des arbres intermédiaires, les moyens d'embrayage étant accessibles, pour les besoins d'entretien, par enlèvement ou ouverture de couvercles (71 à 74) du carter de boîte de vitesses; caractérisé par les traits suivants, en combinaison:les pignons (11, 12) d'arbre intermédiaire comprennent des pignons (11) d'entrée d'arbre intermédiaire, de changement de vitesse, et des pignons (12) de sortie d'arbre intermédiaire, chaque arbre intermédiaire portant un pignon d'entrée d'arbre intermédiaire et un pignon de sortie d'arbre intermédiaire; le pignon (11) d'entrée d'arbre intermédiaire de chaque arbre de ladite pluralité d'arbres intermédiaires (1, 2, 3, 4) engrène directement avec le pignon (50, 500) d'arbre d'entrée, et le pignon (12) de sortie d'arbre intermédiaire de chaque arbre de ladite pluralité d'arbres intermédiaires engrène directement avec le pignon (60, 600) d'arbre de sortie; un arbre intermédiaire particulier (1, 2, 3, 4) avec ses moyens d'embrayage (10, 20, 30, 40) et ses pignons d'arbre intermédiaire (11, 12) correspondants étant prévu pour chaque rapport de transmission du train d'engrenages, transmis par arbre intermédiaire; et les moyens d'embrayage (10, 20, 30, 40) étant situés dans la carter (70) de boîte de vitesses, à une de ses extrémités, pour ledit accès.

2. Train d'engrenages pour changement de vitesse à engrènement constant suivant la revendication 1, caractérisé en ce que le pignon (50, 500) d'arbre d'entrée constitue l'unique accouplement d'entrée d'entraînement pour le train d'engrenages.

3. Train d'engrenages pour changement de vitesse à engrènement constant suivant la revendication 1 ou la revendication 2, caractérisé en ce que à la fois les pignons (11) d'entrée d'arbre intermédiaire et les pignons (12) de sortie d'arbre intermédiaire sont des pignons de changement de vitesse.

4. Train d'engrenages pour changement de vitesse à engrènement constant suivant l'une quelconque des revendications précédentes, caractérisé en ce que le pignon (50, 500) d'arbre d'entrée, ou le pignon (60, 600) d'arbre de sortie, fait partie d'un groupe de pignons.

5. Train d'engrenages pour changement de vitesse à engrènement constant suivant l'une quelconque des revendications précédentes, caractérisé en ce que l'arbre d'entrée et l'arbre de sortie sont disposés coaxialement.

6. Train d'engrenages pour changement de vitesse à engrènement constant suivant l'une quelconque des revendications précédentes, caractérisé en ce que les moyens d'enbrayage (10, 20, 30, 40) peuvent être actionnés chacun sélectivement par des pistons correspondants (15), commandés par pression de fluide, adjacents aux moyens d'embrayage et placés dans le carter (70) de boîte de vitesses à sa dite extrémité, ces pistons et les moyens d'embrayage étant accessibles pour les besoins d'entreitien.

7. Train d'engrenages pour changement de vitesse à engrènement constant suivant l'une quelconque des revendications précédentes, caractérisé en ce que l'arbre d'entrée (5, 55) reçoit un entraînement d'entrée provenant d'un arbre (8, 88) par l'intermédiaire d'une transmission à pignons coniques ou analogues (85, 885).

8. Train d'engrenages pour changement de vitesse à engrènement constant suivant la revendication 7, caractérisé en ce que l'arbre de sortie (6, 66) fournit un entraînement de sortie, à une extrémité du carter (70) de boîte de vitesses, et les couvercles (71, 72, 73, 74) sont situés à l'autre extrémité du carter de boîte de vitesses, de sorte que le train d'engrenages peut être entraîné par un moteur de véhicule monté transversalement dans un véhicule, par rapport à l'axe avant-arrière du véhicule, l'extrémité du carter (70) de boîte de vitesses contenant les moyens d'embrayage étant placée en bout sur le véhicule, pour un accès facile aux moyens d'embrayage.

9. Train d'engrenages pour changement de vitesse à engrènement constant suivant l'une quelconque des revendications précédentes, caractérisé en ce que les arbres intermédiaires multiplex (1, 2, 3, 4) comprennent chacun un ensemble concentrique constitué d'un arbre intérieur (506) et d'un arbre extérieur (502) montés l'un dans l'autre, les pignons (11) d'entrée d'arbre intermédiaire sont montés sur les arbres extérieures (502) d'arbre intermédiaire et les pignons (12) de sortie d'arbre intermédiaire sont montés sur les arbres intérieurs (506) d'arbre intermédiaire.

10. Train d'engrenages pour changement de vitesse à engrènement constant suivant l'une quelconque des revendications 1 à 8, caractérisé en ce que les arbres intermédiaires multiples (1, 2, 3, 4) comprennent chacun un ensemble concentrique constitué d'un arbre intérieur (506) et d'un arbre extérieur (502) disposés l'un dans l'autre, les pignons (11) d'entrée d'arbre intermédiaire sont montés sur les arbres intérieurs (506) d'arbre intermédiaire et les pignons (12) de sortie d'arbre intermédiaire sont montés sur les arbres extérieurs (502) d'arbre intermédiaire.

11. Train d'engrenages pour changement de vitesse à engrènement constant suivant la revendication 10, caractérisé en ce que les pignons (11) d'entrée d'arbre intermédiaire sont disposés de manière à engrener avec le pignon (50) d'arbre d'entrée, à l'extrémité du carter (70) de boîte de vitesses opposée aux couvercles (71, 72, 73, 74).

12. Train d'engrenages pour changement de vitesse à engrènement constant suivant la revendication 9, caractérisé en ce que chacun des moyens d'enbrayage (10, 20, 30, 40) comprend un empilage de disques et un flasque ou couvercle (504) et en ce que ce flasque ou couvercle est directement relié au pignon (11) d'entrée d'arbre intermédiaire.

13. Train d'engrenage pour changement de vitesse à engrènement constant suivant la revendication 9 ou la revendication 12, caractérisé en ce que le pignon (60, 600) d'arbre de sortie est situé à l'extrémité du carter de boîte de vitesses opposée aux couvercles (71, 72, 73, 74).

14. Train d'engrenages pour changement de vitesse à engrènement constant suivant l'une quelconque des revendications 1 à 7, caractérisé en ce que l'arbre de sortie (6) traverse la paroi d'extrémité du carter (70) de boîte de vitesses, à la même extrémité du carter que celle où sont placés les couvercles (71, 72, 73, 74).

15. Train d'engrenages pour changement de vitesse à engrènement constant suivant l'une quelconque des revendications 1 à 14, caractérisé en ce que les couvercles (71, 72, 73, 74) du carter (70) de boîte de vitesses ne servent pas à supporter des paliers pour les arbres intermédiaires (1, 2, 3, 4) et peuvent être enlevés ou ouverts sans déplacer les arbres intermédiaires.

16. Train d'engrenages pour changement de vitesse à engrènement constant suivant l'une quelconque des revendications 1 à 15, caractérisé en ce que des moyens de commande sont prévus pour les moyens d'embrayage (10, 20, 30, 40), les moyens de commande pouvant être actionnés pour effectuer un engagement partiel d'au moins l'un des moyens d'embrayage, en plus des moyens d'embrayage enclenchés pour les besoins de transmission d'entraînement, afin de ralentir le train d'engrenages.

17. Train d'engrenages pour changement de vitesse à engrènement constant suivant la revendication 16, caractérisé en ce que les moyens de commande peuvent être actionnés, lorsqu'un rapport de transmission est enclenché pour des besoins de transmission d'entraînement afin d'obtenir une certaine plage de vitesse de l'arbre de sortie, de manière à enclencher partiellement les moyens d'embrayage d'un autre rapport de transmission correspondant à une plage et vitesse inférieure de l'arbre de sortie.

18. Train d'engrenages pour changement de vitesse à engrènement constant suivant la revendication 16, caractérisé en ce que les moyens de commande peuvent être actionnés, lorsqu'un rapport de transmission est enclenché pour des besoins de transmission d'entraînement afin d'obtenir une plage de vitesse de l'arbre de sortie, de manière à engager partiellement les moyens d'embrayage de deux autres rapports de transmission correspondant à des plages de vitesses inférieures de l'arbre de sortie.

19. Véhicule routier, comprenant un train d'engrenages pour changement de vitesse à engrènement constant suivant l'une quelconque des revendications précédentes.

20. Véhicule routier suivant la revendication 19, caractérisé en ce qu'un moteur de véhicule est monté ou peut être monté transversalement dans le véhicule, par rapport à l'axe avant-arrière du véhicule, et à l'extrémité arrière du véhicule par rapport à son sens de déplacement normal en marche avant, le carter (70) de boîte de vitesses étant monté près d'une extrémité de ce moteur, pour en recevoir l'entrée d'entraînement, et la sortie d'entraînement étant transmise par un arbre de propulsion (100) et un engrenage différentiel (112) aus roues arrière du véhicule, par l'intermédiaire d'un engrenage de sortie (9) du train d'engrenages.

FIG.1

FIG.2

FIG.3

FIG.4

FIG.5

FIG.6

FIG.7

0 012 022

FIG. 8

FIG.9